# EUROPÄISCHE PATENTSCHRIFT

(11) **EP 4 014 301 B1**
(45) Veröffentlichungstag und Bekanntmachung des Hinweises auf die Patenterteilung: **08.01.2025**
(21) Anmeldenummer: 20751471.2
(22) Anmeldetag: 30.07.2020
(51) Int. Cl.: H02K 1/30, H02K 15/12, H02K 17/16

(54) **ELEKTROMOTOR MIT EINEM AUF EINE WELLE, INSBESONDERE ROTORWELLE, AUFGESTECKTEM AKTIVTEIL**
ELECTRIC MOTOR WITH AN ACTIVE PART PLUGGED ONTO A SHAFT, ESPECIALLY A ROTOR SHAFT
MOTEUR ÉLECTRIQUE AVEC UNE PARTIE ACTIVE MONTÉE SUR UN ARBRE, NOTAMMENT UN ARBRE DE ROTOR

(30) Priorität: 13.08.2019 DE 102019005666
(43) Veröffentlichungstag der Anmeldung: 22.06.2022
(73) Patentinhaber: SEW-EURODRIVE GmbH & Co. KG, 76646 Bruchsal (DE)
(72) Erfinder: PARTHEYMÜLLER, Alexander, 76139 Karlsruhe (DE); GOLDSCHMIDT, Tobias, 76344 Eggenstein-Leopoldshafen (DE)
(86) Internationale Anmeldenummer: PCT/EP2020/025350
(87) Internationale Veröffentlichungsnummer: WO 2021/028071

(56) Entgegenhaltungen:
- EP-A1- 2 955 817
- EP-A1- 2 955 817
- DE-A1- 3 728 000
- DE-A1- 3 728 000
- GB-A- 1 093 419
- GB-A- 1 093 419
- JP-A- 2004 129 466
- JP-A- 2004 129 466
- US-A1- 2005 140 238
- US-A1- 2005 140 238
- US-A1- 2013 187 487
- US-A1- 2013 187 487
- US-A1- 2015 048 707
- US-A1- 2015 048 707
- US-A1- 2017 353 069
- US-A1- 2017 353 069

## Beschreibung

Die Erfindung betrifft einen Elektromotor mit einem auf eine Welle, insbesondere Rotorwelle, aufgestecktem Aktivteil

Es ist allgemein bekannt, dass ein Elektromotor ein Aktivteil aufweist. Beispielsweise weist ein Asynchronmotor einen Kurzschlusskäfig als Aktivteil auf. Ein Synchronmotor hingegen weist ein Aktivteil mit Dauermagneten auf.

Aus der DE 10 2008 027 758 A1 ist ein Rotor für eine permanenterregte dynamoelektrische Maschine bekannt.

Aus der US 2005 / 140 238 A1 ist ein Rotor eines Reluktanzmotors bekannt.

Aus der DE 689 15 530 T2 ist ein Verfahren zur Befestigung eines Rotors radialer Bauart an der Ausgangswelle eines Synchronmotors bekannt.

Aus der DE 37 28 000 A1 ist eine Endscheibe für das Läuferblechpaket eines Elektromotors bekannt.

**Aus der** EP 2 955 817 A1 **ist als nächstliegender Stand der Technik ein Elektromotor mit Aktivteil und einem Verteilerring bekannt, der eine nach axial außen mündende Einlassöffnung aufweist.**

**Aus der** US 2013/187487 A1 **ist ein bürstenloser Motor bekannt.**

**Aus der** GB 1 093 419 A **ist eine elektrische Installation von rotierenden Komponenten bekannt.**

**Aus der** JP 2004 129466 A **ist ein auf eine Welle aufgesteckter Ring mit nach radial innen hervorragenden Vorsprüngen bekannt.**

**Aus der** US 2015/048707 A1 **ist ein in Umfangsrichtung anisotroper Ring bekannt.**

**Aus der** US 2017/353069 A1 **ist ein Rotor für eine elektrische Maschine bekannt.**

Der Erfindung liegt daher die Aufgabe zugrunde, ein Aktivteil kraftarm mit einer Rotorwelle zu verbinden.

Erfindungsgemäß wird die Aufgabe bei dem Elektromotor nach den in Anspruch 1 angegebenen Merkmalen gelöst.

Wichtige Merkmale der Erfindung bei dem Elektromotor sind, dass der Elektromotor mit einem auf eine Welle, insbesondere Rotorwelle, aufgestecktem Aktivteil ausgeführt ist, wobei ein Verteilerring auf die Welle aufgesteckt ist und das Aktivteil berührt,
wobei der Verteilerring eine Ringnut aufweist, welche über eine Einlassöffnung nach radial außen, insbesondere in die Umgebung, mündet und welche über Auslassöffnungen in einen Spalt mündet, der zwischen Verteilerring und Welle angeordnet ist,
wobei der Spalt radial innerhalb der Ringnut angeordnet ist und/oder wobei der von der Ringnut überdeckte Radialabstandsbereich radial außerhalb des von dem Spalt überdeckten Radialabstandbereichs angeordnet ist,
wobei zwischen Aktivteil und Welle Spaltbereiche ausgebildet sind, welche jeweils in den Spalt münden.

Von Vorteil ist dabei, dass durch die eine einzige Einlassöffnung bei der Herstellung des Elektromotors flüssiger Klebstoff zuführbar ist, insbesondere unter Druck einpressbar, und der Klebstoff dann zu den Auslassöffnungen führbar ist. Diese Auslassöffnungen stehen sich diametral gegenüber. Von dort tritt dann der Klebstoff in den Spalt zwischen Verteilerring und Welle ein und verteilt sich am Umfang gleichmäßiger als bei Verwendung nur einer einzigen Zuführungsstelle. Die Spaltbereiche werden vom Spalt befüllt. Da der Spalt eine größere Spaltbreite hat als die Spaltbereiche, werden diese vom gleichmäßig am Umfang im Spalt verteilten Klebstoff befüllt, insbesondere gleichmäßig. Nach Aushärten des Klebstoffs sind somit stoffschlüssige Verbindungen zwischen Verteilerring und Aktivteil sowie zwischen Aktivteil und Welle und auch zwischen Verteilerring und Welle erreicht.

Bei einer vorteilhaften Ausgestaltung weist das Aktivteil ein Blechpaket auf, dessen Einzelbleche stanzpaketiert. Von Vorteil ist dabei, dass eine einfache Herstellung ermöglicht ist.

Bei einer vorteilhaften Ausgestaltung grenzt der vom Verteilerring in axialer Richtung überdeckte Bereich an den vom Aktivteil in axialer Richtung überdeckten Bereich an. Von Vorteil ist dabei, dass der Verteilerring axial neben dem Aktivteil angeordnet ist.

Erfindungsgemäß ist an der Welle eine Wellenstufe ausgebildet, an welcher der Verteilerring zentriert und ausgerichtet ist, indem der der Verteilerring mit einer topfförmigen Ausnehmung auf die Wellenstufe aufgesteckt ist, insbesondere wobei der Verteilerring eine Einführschräge aufweist zum Einfädeln der Wellenstufe in die topfförmige Ausnehmung. Von Vorteil ist dabei, dass eine axiale wohldefinierte Position des Verteilerrings erreicht ist und das Aktivteil direkt an den Verteilerring axial angrenzend und berührend anordenbar ist. Weitere Hilfsmittels zur axialen Festlegung der Position des Aktivteils sind also nicht notwendig.

Bei einer vorteilhaften Ausgestaltung ist zwischen dem Verteilerring und der Wellenstufe der Welle eine erste Dichtung, insbesondere O-Ring oder an den Verteilerring angespritzte Dichtung, angeordnet. Von Vorteil ist dabei, dass eine verbesserte Abdichtung erreichbar ist und das Austreten von Klebstoff verhindert ist.

Bei einer vorteilhaften Ausgestaltung ist zwischen dem Verteilerring und dem Aktivteil (2) eine zweite Dichtung, insbesondere O-Ring oder an den Verteilerring angespritzte Dichtung, angeordnet. Von Vorteil ist dabei, dass eine verbesserte Abdichtung erreichbar ist und das Austreten von Klebstoff verhindert ist.

Bei einer vorteilhaften Ausgestaltung wird die Ringnut vom Aktivteil, insbesondere von einem ersten Einzelblech des Aktivteils, begrenzt,
insbesondere wobei die Ringnut vom Aktivteil, insbesondere von einem ersten Einzelblech des Aktivteils, zusammen mit dem Verteilerring begrenzt wird. Von Vorteil ist dabei, dass nur wenige Bauteile notwendig sind.

Bei einer vorteilhaften Ausgestaltung erstreckt sich die Ringnut in Umfangsrichtung sich von dem von der Einlassöffnung überdeckten Umfangswinkelbereich bis zu den jeweiligen von den beiden Auslassöffnungen überdeckten Umfangswinkelbereichen. Von Vorteil ist dabei, dass der Klebstoff verteilt wird und somit durch Einspritzen an zwei Auslassöffnungen der Klebstoff im Spalt gleichmäßig am Umfang verteilt wird, so dass die Spaltbereiche gleichmäßig befüllt werden.

Bei einer vorteilhaften Ausgestaltung erstreckt der Spalt sich in Umfangsrichtung ununterbrochen umlaufend. Von Vorteil ist dabei, dass der Klebstoff sich am gesamten Umfangs gleichmäßig verteilt.

Bei einer vorteilhaften Ausgestaltung ist die Ringnut vom Verteilerring zusammen mit dem Aktivteil begrenzt. Von Vorteil ist dabei, dass nur eine geringe Anzahl von Bauteilen notwendig ist.

Bei einer vorteilhaften Ausgestaltung überlappt der vom Spalt in axialer Richtung überdeckte Bereich mit dem von der Ringnut in axialer Richtung überdeckten Bereich oder ist von diesem umfasst. Von Vorteil ist dabei, dass der Spalt radial innerhalb der Ringnut angeordnet ist. Der Verteilerring weist hierzu an seiner von dem Aktivteil abgewandten Seite einen nach radial innen hervorragenden in Umfangsrichtung ununterbrochen umlaufenden Vorsprung auf, so dass der Spalt axial vom Verteilerring selbst und andererseits, also an seiner dem Aktivteil zugewandten Seite, von dem Aktivteil begrenzt ist.

**Erfindungsgemäß** sind die Spaltbereiche voneinander abgetrennt mittels am Aktivteil, insbesondere am Blechpaket des Aktivteils, nach radial innen zur Welle hin hervorragende Vorsprünge,
insbesondere welche die Welle berühren. Von Vorteil ist dabei, dass die Beabstandung des Aktivteils von der Welle mittels der Vorsprünge festlegbar ist und somit auch die Spaltbreite der Spaltbereiche.

Bei einer vorteilhaften Ausgestaltung sind die Vorsprünge in Umfangsrichtung voneinander regelmäßig und/oder gleichmäßig beabstandet
und/oder die Spaltbereiche sind zueinander gleichartig ausgeformt, insbesondere also geht jeder Spaltbereich durch eine Drehung in Umfangsrichtung um einen Winkelbetrag jeweils in einen der anderen Spaltbereiche über. Von Vorteil ist dabei, dass die Spaltbereiche gleichmäßig befüllt sind mit Klebstoff und somit Unwucht des Rotors des Elektromotors insgesamt verhindert ist. Denn bei hoher Drehzahl würde ungleichmäßiges Verteilen von Klebstoff und ungleichmäßig ausgeführte Spaltbreiten der Spaltbereiche zu wesentlicher Unwucht oder auch zu wesentlichen Beiträgen der höheren Multipolmomente der Multipolentwicklung des Trägheitstensors des Rotors führen.

**Erfindungsgemäß** sind die Spaltbereiche zumindest teilweise und die Ringnut sowie der Spalt mit insbesondere ausgehärtetem Klebstoff befüllt, insbesondere so, dass die Welle mit dem Verteilerring und mit dem Aktivteil stoffschlüssig verbunden ist, insbesondere und der Verteilerring mit dem Aktivteil, insbesondere mit dem ersten Einzelblech des Blechpakets des Aktivteils. Von Vorteil ist dabei, dass der Verteilerring nach Herstellen der Klebeverbindung am Rotor verbleibt, also Teil des Elektromotors ist. Somit begrenzt der Verteilerring das Aktivteil dann axial, wenn die formschlüssige Verbindung zwischen Aktivteil und Welle versagt.

Bei einer vorteilhaften Ausgestaltung ist die radiale Breite der Spaltbereiche kleiner als die radiale Ausdehnung der Ringnut. Von Vorteil ist dabei, dass der Klebstoff mit geringem Druck im Spalt verteilbar ist und der Druck im Spalt nahezu konstant ist. Durch Erhöhen des Drucks an der Einlassöffnung steigt also der Druck im Spalt und dadurch wird der Klebstoff auch in die Spaltbereiche hineingedrückt.

Da das Aktivteil ein Blechpaket aus Einzelblechen aufweist, verbindet der in die Spaltbereiche eingedrungenen Klebstoff auch diese einzelbleche miteinander und trägt somit zum Zusammenhalt des Blechpakets bei.

Die Erfindung wird nun anhand von schematischen Abbildungen näher erläutert:
In der Figur 1 ist ein Bereich eines Rotors eines Elektromotors, der nicht Teil der vorliegenden Erfindung ist, schematisch gezeigt, wobei ein Verteilerring 3 explodiert dargestellt ist.

In der Figur 2 ist ein Längsschnitt durch den zugehörigen Zusammenbau des Rotors dargestellt, wobei die Schnittebene einen Vorsprung 7 schneidet

In der Figur 3 ist ein Längsschnitt durch einen Rotor eines erfindungsgemäßen Elektromotors dargestellt.

In der Figur 4 ist eine Draufsicht auf den Rotor dargestellt.

In der Figur 5 ein Ausschnitt der Figur 3 vergrößert dargestellt.

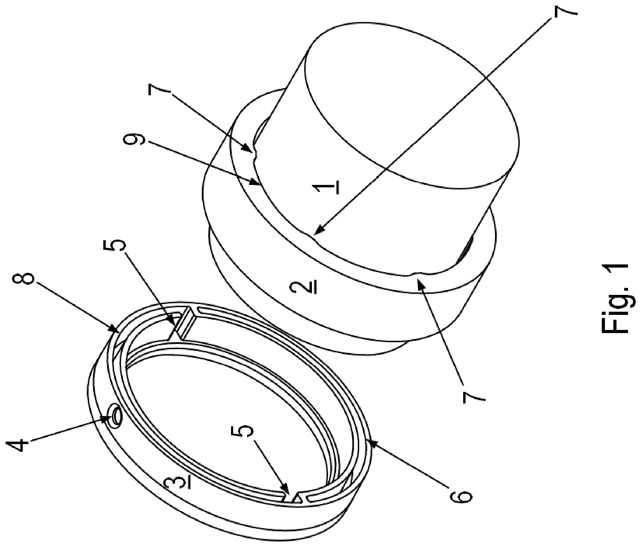

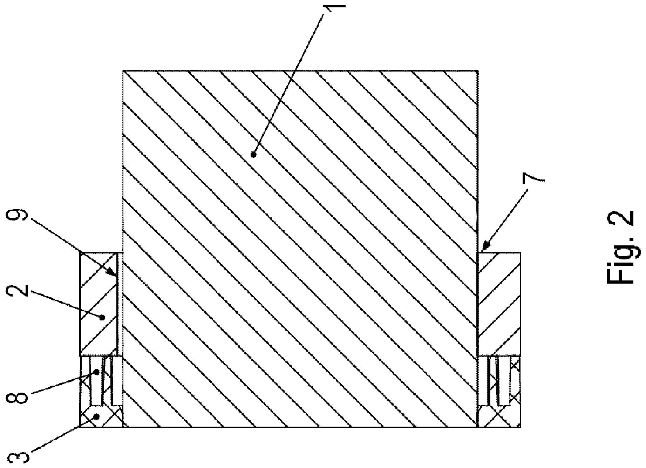

Wie in den Figuren 1 und 2 dargestellt, weist der Elektromotor eine Welle 1, insbesondere Rotorwelle, auf, auf welcher ein Aktivteil 2, insbesondere Blechpaket mit Kurzschlusskäfig, aufgesteckt ist.

Zur Herstellung einer Klebeverbindung des Aktivteils 2 mit der Welle 1 wird ein Verteilerring 3 auf die Welle 1 aufgesteckt und an das Aktivteil 2 angedrückt.

Der Klebstoff wird durch die Einlassöffnung 4 des Verteilerrings 3 von radial außen herkommend eingepresst und tritt durch Auslassöffnungen 5 des Verteilerrings 3 nach radial innen in einen Spalt zwischen Verteilerring 3 und Welle 1 aus. Dieser Spalt ist in Umfangsrichtung umlaufend. Vorzugsweise weist er eine vom Umfangswinkel unabhängige Spaltbreite auf. Dabei wird die Spaltbreite in radialer Richtung gemessen.

Zwischen dem Aktivteil 2 und der Welle 1 ist ebenfalls ein Spalt ausgebildet, der aber in Umfangsrichtung nicht ununterbrochen, sondern unterbrochen ist. Denn das Aktivteil 2 weist in Umfangsrichtung voneinander regelmäßig und/oder gleichmäßig beabstandete Vorsprünge 7 auf, die die Welle berühren und somit den Spalt in Teilbereiche trennen.

Die Vorsprünge 7 sind nach radial innen gerichtet und daher an der Innenwandung des Aktivteils 2 angeordnet.

Das Aktivteil weist vorzugsweise ein Blechpaket auf, das aus in axialer Richtung aufeinander gestapelt angeordneten Einzelblechen paketiert, insbesondere stanzpaketiert, ist.

Jedes der Einzelbelche wird als Stanzteil hergestellt. Daher ist das Vorsehen von nach radial innen hervorragenden Vorsprüngen 7 an einer ansonsten kreisförmigen Ausnehmung des Einzelblechs ohne besonderen Aufwand ausführbar. die Vorsprünge 7 trennen somit Spaltbereiche 9 voneinander ab, welche zwischen Aktivteil 2 und Welle 1 angeordnet sind.

Der somit aus den Spaltbereiche 9 mehrteilig gebildete, zwischen dem Aktivteil 2 und der Welle 1 ausgebildete Spalt, insbesondere also die Teilbereiche, mündet, insbesondere münden, in den zwischen dem Verteilerring 3 und der Welle 1 ausgebildeten Spalt.

Auf der vom Aktivteil 2 abgewandten Seite des Verteilerrings 3 ist der Verteilerring 3 auf die Welle 1 dicht berührend angeordnet, insbesondere aufgepresst.

Die Einlassöffnung 4 mündet in eine in Umfangsrichtung sich bis zu den Auslassöffnungen 5 erstreckende Ringnut 8, welche im Verteilerring ausgeformt ist und in axialer Richtung zum Aktivteil 2 hin geöffnet ist, insbesondere so, dass das Aktivteil 2, insbesondere das erste Einzelblech des Blechpakets, die Ringnut 8 begrenzt und abdichtet.

Bei den Auslassöffnungen 5 ist die Ringnut 8 unterbrochen und ist nach der Unterbrechung zwar als weiterer Ringnutbereich 6 fortgesetzt. Dieser Ringnutbereich 6 ist sozusagen blind ausgeführt, führt also keinen Klebstoff und trägt nur zur Stabilität und Steifigkeit des Verteilerrings 3 bei.

Die axiale Richtung, der Radialabstand und die Umfangsrichtung sind jeweils bezogen auf die Drehachse der Welle 1.

Nach Einspritzen des Klebstoffes durch die Einlassöffnung 4 fließt dieser also durch die Ringnut 8 zur Hälfte in Umfangsrichtung und die andere Hälfte des Klebstoffs entgegen der Umfangsrichtung in der Ringnut 8 bis zu den Auslassöffnungen 5, an denen es nach radial innen austritt in den Spalt zwischen der Welle 1 und dem Aktivteil 2. Der Klebstoff breitet sich somit in Umfangsrichtung gleichmäßig aus.

Vorteiligerweise weist der Verteilerring nur eine einzige Einlassöffnung 4 auf. Der Klebstoff muss also nur an dieser einen Stelle eingespritzt werden. Durch die Vorsehung zweier Auslassöffnungen 5, die sich diametral gegenüberstehen, also in Umfangsrichtung 180° zueinander versetzt sind, ist eine möglichst gleichmäßige Verteilung des Klebstoffes am Umfang der Welle erreichbar.

Die Ringnut 8 weist eine radiale Breite auf, die größer, insbesondere mindestens zehnmal größer, ist als die radiale Breite des Spalts zwischen Welle 1 und Aktivteil 2.

Die Vorsprünge 7 definieren die Spaltbreite zwischen Aktivteil 2 und Welle 1. Außerdem sind die Vorsprünge 7 in Umfangsrichtung möglichst wenig ausgedehnt. Um aber die Verformung des Aktivteils 2, insbesondere der Vorsprünge 7, gering zu halten, weisen die Vorsprünge 7 eine konkave Rundung auf, deren Krümmungsradius dem Außenradius der Welle 1 entspricht, so dass der Vorsprung 7 flächig an der Welle 1 anliegt und der Anpressdruck geringgehalten ist.

Bei weiteren Ausführungsbeispielen ist am Verteilerring an dessen Innenwandung auf der vom Aktivteil 2 abgewandten Endbereich der Innenwandung eine Zentrierstufe ausgeführt, welche eine Stufe der Welle 1 aufnimmt. Somit ist der Verteilerring 3 an der Welle 1 zentriert und eine konstante Spaltbreite des Spaltes zwischen Verteilerring 3 und Welle 1 für den gesamten vom Spalt in Umfangsrichtung überdeckten Bereich gewährleistet.

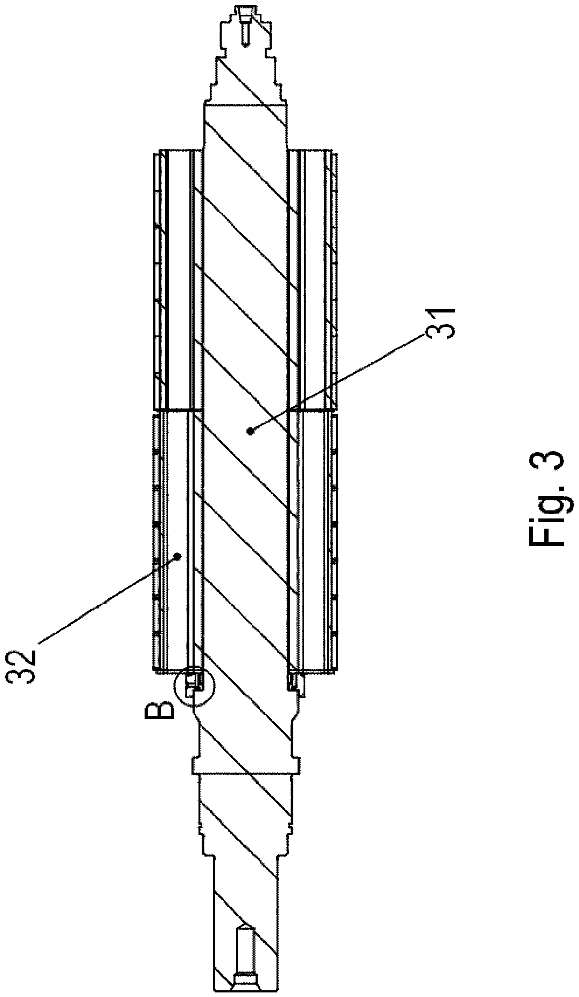

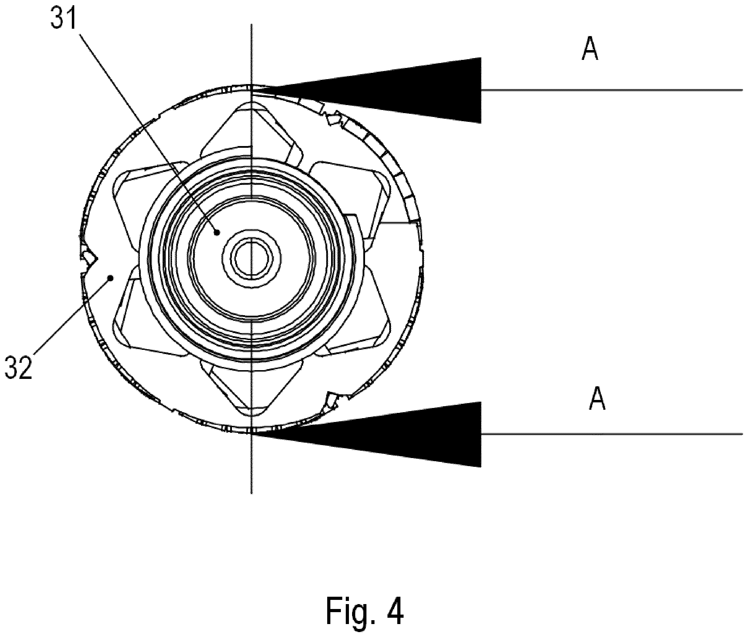

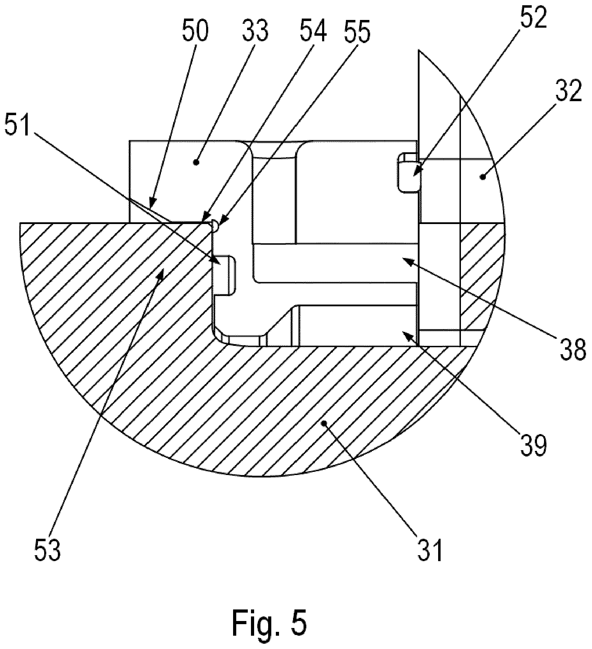

Wie in Figur 3 bis 5 für einen erfindungsgemäßen Elektromotor dargestellt, weist die Welle 31 im Unterschied zur Welle 1 eine Wellenstufe 53 an der vom Aktivteil 32 abgewandten Seite des Verteilerrings 33 auf. Gegen diese Wellenstufe 53 ist der Verteilerring 33 angestellt und an ihr zentriert.

Hierzu ist an der Welle 31 eine in Umfangsrichtung umlaufende zylindrische Fläche ausgebildet, welche einen als Berührfläche 54 fungierenden Oberflächenbereich aufweist.

An der axialen Stirnseite der Wellenstufe 53 liegt der Verteilerring 33 ebenfalls an.

Am Verteilerring 33 ist zur Aufnahme der Wellenstufe 53 eine entsprechende topfförmige Vertiefung, insbesondere also eine zylindrische Ausnehmung, ausgeformt, die axial von der Ringnut 38 beabstandet ist. Ein Freistich 55 ist in der Innenkante der topfförmigen Vertiefung vorgesehen, um die Außenkante der Wellenstufe 53 Freiraum zu geben. Somit liegt der Verteilerring 33 wohldefiniert in radialer Richtung an der Berührfläche 54 und in axialer Richtung an der Stirnseite der Wellenstufe 53 an.

Somit ist der Verteilerring 33 an der Wellenstufe 53 in radialer und in axialer Richtung zentriert und ausgerichtet.

Im weiteren Unterschied zum Verteilerring 3 der Figuren 1 und 2 weist der Verteilerring 33 einen ersten Raumbereich 51, insbesondere Ringnut, auf, in welchem eine Dichtung, insbesondere O-Ring, aufnehmbar ist. Der Raumbereich 51 ist in Umfangsrichtung vollständig umlaufend ausgeführt. Somit ist eine Abdichtung des Spaltbereichs 39, der zwischen dem Verteilerring 33 und der Welle 31 erreicht. Denn der O-Ring ist zwischen dem Verteilerring 33 und der Welle 31 angeordnet.

Außerdem ist an der dem Aktivteil 32 zugewandten Seite des Verteilerrings 33 ein zweiter Raumbereich 52, insbesondere Ringnut, angeordnet, in welchem eine zweite Dichtung, insbesondere O-Ring, aufnehmbar ist. Somit ist eine Abdichtung der Ringnut 38 des Verteilerrings 33 erreicht. Denn der zweite Raumbereich ist auf zur Drehachse des Rotors größerem Radialabstand angeordnet als die Ringnut 38. Die Ringnut 38 ist wiederum in Umfangsrichtung umlaufend angeordnet. Diese zweite Dichtung ist also zwischen dem Verteilerring 33 und dem Aktivteil 32 angeordnet.

Außerdem weist der Verteilerring 33 eine Einführschräge 50 auf, so dass das Einfädeln des Verteilerrings 33 einfach ausführbar ist.

Die restlichen Merkmale des Verteilerrings 33, der Welle 31 und des Aktivteils 32 entsprechen den für die Figuren 1 und 2 beschriebenen Merkmalen.

Bei weiteren erfindungsgemäßen Ausführungsbeispielen sind die Dichtungen nicht als O-Ringe ausgeführt, sondern als an den Verteilerring 33 angespritzte Dichtungen. Die Raumbereiche 51 und 52 sind dann nicht vorhanden oder nur verkleinert ausgeführt.

### Bezugszeichenliste

1 Welle
2 Aktivteil
3 Verteilerring
4 Einlassöffnung
5 Auslassöffnung
6 weiterer Ringnutbereich
7 Vorsprung, insbesondere nach radial innengerichteter Vorsprung
8 Ringnut
9 Spaltbereich
31 Welle
32 Aktivteil
33 Verteilerring
38 Ringnut
39 Spaltbereich
50 Einführschräge
51 erster Raumbereich, insbesondere Ringnut, für Dichtung, insbesondere O-Ring
52 zweiter Raumbereich, insbesondere Ringnut, für Dichtung, insbesondere O-Ring
53 Wellenstufe
54 Berührfläche, umlaufend zylindrisch

## Patentansprüche

1. Elektromotor mit einem auf eine Welle (1, 31), insbesondere Rotorwelle, aufgestecktem Aktivteil (2),
wobei ein Verteilerring (3, 33) auf die Welle (1, 31) aufgesteckt ist und das Aktivteil (2) berührt,
wobei der Verteilerring (3, 33) eine Ringnut (8) aufweist,
wobei
die Ringnut (8) über eine Einlassöffnung (4) nach radial außen, insbesondere in die Umgebung, mündet und welche über Auslassöffnungen (5) in einen Spalt (39) mündet, der zwischen Verteilerring (3, 33) und Welle (1, 31) angeordnet ist,
wobei der Spalt (39) radial innerhalb der Ringnut (8) angeordnet ist und/oder wobei der von der Ringnut (8) überdeckte Radialabstandsbereich radial außerhalb des von dem Spalt (39) überdeckten Radialabstandbereichs angeordnet ist,
wobei zwischen Aktivteil (2) und Welle (1, 31) Spaltbereiche (9) ausgebildet sind, welche jeweils in den Spalt (39) münden,
**wobei die Spaltbereiche (9) zumindest teilweise und die Ringnut (8) sowie der Spalt (39) mit Klebstoff befüllt sind,**
**so, dass die Welle (1, 31) mit dem Verteilerring (3, 33) und mit dem Aktivteil (2) stoffschlüssig verbunden ist,**
**wobei die Spaltbereiche (9) voneinander abgetrennt sind mittels am Aktivteil (2), insbesondere am Blechpaket des Aktivteils (2), nach radial innen zur Welle (1, 31) hin hervorragende Vorsprünge,**
**wobei an der Welle (1, 31) eine Wellenstufe ausgebildet ist, an welcher der Verteilerring (3, 33) zentriert und ausgerichtet ist, indem der Verteilerring (3, 33) mit einer topfförmigen Ausnehmung auf die Wellenstufe (53) aufgesteckt ist.**

2. Elektromotor nach Anspruch 1,
**dadurch gekennzeichnet, dass**
das Aktivteil (2) ein Blechpaket aufweist, dessen Einzelbleche stanzpaketiert sind.

3. Elektromotor nach einem der vorangegangenen Ansprüche,
**dadurch gekennzeichnet, dass**
**der Verteilerring eine Einführschräge (50) aufweist zum Einfädeln der Wellenstufe (53) in die topfförmige Ausnehmung.**

4. Elektromotor nach einem der vorangegangenen Ansprüche,
**dadurch gekennzeichnet, dass**
zwischen dem Verteilerring (3, 33) und der Wellenstufe (53) der Welle (1, 31) eine erste Dichtung, insbesondere O-Ring oder an den Verteilerring (3, 33) angespritzte Dichtung, angeordnet ist,
und/oder dass
zwischen dem Verteilerring und dem Aktivteil (2) eine zweite Dichtung, insbesondere O-Ring oder an den Verteilerring (3, 33) angespritzte Dichtung, angeordnet ist.

5. Elektromotor nach einem der vorangegangenen Ansprüche, **dadurch gekennzeichnet, dass**
der vom Verteilerring (3, 33) in axialer Richtung überdeckte Bereich an den vom Aktivteil (2) in axialer Richtung überdeckten Bereich angrenzt.

6. Elektromotor nach einem der vorangegangenen Ansprüche,
**dadurch gekennzeichnet, dass**
die Ringnut (8) vom Aktivteil (2), insbesondere von einem ersten Einzelblech des Aktivteils (2), begrenzt wird,
insbesondere wobei die Ringnut (8) vom Aktivteil (2), insbesondere von einem ersten Einzelblech des Aktivteils (2), zusammen mit dem Verteilerring (3, 33) begrenzt wird.

7. Elektromotor nach einem der vorangegangenen Ansprüche,
**dadurch gekennzeichnet, dass**
die Ringnut (8) **zwei Auslassöffnungen (5) aufweist und** in Umfangsrichtung sich von dem von der Einlassöffnung (4) überdeckten Umfangswinkelbereich bis zu den jeweiligen von den beiden Auslassöffnungen (5) überdeckten Umfangswinkelbereichen erstreckt.

8. Elektromotor nach einem der vorangegangenen Ansprüche,
**dadurch gekennzeichnet, dass**
der Spalt (39) sich in Umfangsrichtung ununterbrochen umlaufend erstreckt,
und/oder dass
die Ringnut (8) vom Verteilerring (3, 33) zusammen mit dem Aktivteil (2) begrenzt ist.

9. Elektromotor nach einem der vorangegangenen Ansprüche,
**dadurch gekennzeichnet, dass**
der Verteilerring (3, 33) einen weiteren Ringnutbereich (6) aufweist,
der von der Ringnut (8) in Umfangsrichtung beabstandet ist,
wobei der vom weiteren Ringnutbereich (6) überdeckte Radialabstandsbereich dem von der Ringnut (8) überdeckten Radialabstandsbereich gleicht,
wobei der vom weiteren Ringnutbereich (6) überdeckte axiale Bereich dem von der Ringnut (8) überdeckten axialen Bereich gleicht.

10. Elektromotor nach einem der vorangegangenen Ansprüche,
**dadurch gekennzeichnet, dass**
der vom Spalt (39) in axialer Richtung überdeckte Bereich mit dem von der Ringnut (8) in axialer Richtung überdeckten Bereich überlappt oder von diesem umfasst ist.

11. Elektromotor nach einem der vorangegangenen Ansprüche,
**dadurch gekennzeichnet, dass**
**die Vorsprünge die Welle (1, 31) berühren.**

12. Elektromotor nach einem der vorangegangenen Ansprüche,
**dadurch gekennzeichnet, dass**
die Vorsprünge in Umfangsrichtung voneinander regelmäßig und/oder gleichmäßig beabstandet sind
und/oder dass die Spaltbereiche (9) zueinander gleichartig ausgeformt sind, insbesondere also ein jeder Spaltbereich durch eine Drehung in Umfangsrichtung um einen Winkelbetrag jeweils in einen der anderen Spaltbereiche (9) übergeht.

13. Elektromotor nach einem der vorangegangenen Ansprüche,
**dadurch gekennzeichnet, dass**
**der Verteilerring (3, 33) mit dem Aktivteil (2), insbesondere mit dem ersten Einzelblech des Blechpakets des Aktivteils (2), stoffschlüssig verbunden ist.**

14. Elektromotor nach einem der vorangegangenen Ansprüche,
**dadurch gekennzeichnet, dass**
die radiale Breite der Spaltbereiche (9) kleiner ist als die radiale Ausdehnung der Ringnut (8).

15. Elektromotor nach einem der vorangegangenen Ansprüche,
**dadurch gekennzeichnet, dass**
der Verteilerring (3, 33), insbesondere an seiner von dem Aktivteil (2) abgewandten Seite, einen nach radial innen hervorragenden, in Umfangsrichtung ununterbrochen umlaufenden Vorsprung (7) auf, welcher an der Welle (1, 31) berührend, insbesondere dicht, anliegt,
insbesondere so, dass der Spalt (39) axial vom Verteilerring (3, 33) selbst und andererseits, also an seiner dem Aktivteil (2) zugewandten Seite, von dem Aktivteil (2) begrenzt ist.

## Claims

1. An electric motor having an active part (2) placed onto a shaft (1, 31), in particular rotor shaft,
wherein a distributor ring (3, 33) is placed onto the shaft (1, 31) and contacts the active part (2),
wherein the distributor ring (3, 33) has an annular groove (8),
wherein the annular groove (8) opens radially outwards, in particular into the surroundings, via an inlet opening (4) and opens via outlet openings (5) into a gap (39) arranged between distributor ring (3, 33) and shaft (1, 31),
wherein the gap (39) is arranged radially within the annular groove (8) and/or wherein the radial distance region covered by the annular groove (8) is arranged radially exterior to the radial distance region covered by the gap (39),
wherein between active part (2) and shaft (1, 31) there are formed gap regions (9) which in each case open into the gap (39),
wherein the gap regions (9) are at least partially filled with adhesive and the annular groove (8) and the gap (39) are filled with adhesive, so that the shaft (1, 31) is integrally connected to the distributor ring (3, 33) and to the active part (2),
wherein the gap regions (9) are separated from one another by means of projections,
projecting radially inwards towards the shaft (1, 31), at the active part (2), in particular at the bundle of laminations of the active part (2),
wherein at the shaft (1, 31) there is formed a shaft step at which the distributor ring (3, 33) is centred and oriented in that the distributor ring (3, 33) is placed onto the shaft step (53) with a pot-shaped cutout.

2. An electric motor according to claim 1,
**characterised in that**
the active part (2) has a bundle of laminations whose individual sheets are punch-packaged.

3. An electric motor according to any one of the preceding claims,
**characterised in that**
the distributor ring has an insertion bevel (50) for the insertion of the shaft step (53) into the pot-shaped cutout.

4. An electric motor according to any one of the preceding claims,
**characterised in that**
a first seal, in particular an O-ring or a seal moulded onto the distributor ring (3, 33), is arranged between the distributor ring (3, 33) and the shaft step (53) of the shaft (1, 31), and/or **in that**
a second seal, in particular an O-ring or a seal moulded onto the distributor ring (3, 33), is arranged between the distributor ring and the active part (2).

5. An electric motor according to any one of the preceding claims,
**characterised in that**
the region covered in an axial direction by the distributor ring (3, 33) borders the region covered in an axial direction by the active part (2).

6. An electric motor according to any one of the preceding claims,
**characterised in that**
the annular groove (8) is bounded by the active part (2), in particular by a first individual sheet of the active part (2),
in particular wherein the annular groove (8) is bounded by the active part (2), in particular by a first individual sheet of the active part (2), together with the distributor ring (3, 33).

7. An electric motor according to any one of the preceding claims,
**characterised in that**
the annular groove (8) has two outlet openings (5) and extends in a circumferential direction from the circumferential angular region covered by the inlet opening (4) as far as the respective circumferential angular regions covered by the two outlet openings (5).

8. An electric motor according to any one of the preceding claims,
**characterised in that**
the gap (39) extends so as to encircle in an uninterrupted manner in a circumferential direction,
and/or **in that**
the annular groove (8) is bounded by the distributor ring (3, 33) together with the active part (2).

9. An electric motor according to any one of the preceding claims,
**characterised in that**
the distributor ring (3, 33) has a further annular groove region (6) spaced apart from the annular groove (8) in a circumferential direction,
wherein the radial distance region covered by the further annular groove region (6) is equal to the radial distance region covered by the annular groove (8),
wherein the axial region covered by the further annular groove region (6) is equal to the axial region covered by the annular groove (8).

10. An electric motor according to any one of the preceding claims,
**characterised in that**
the region covered by the gap (39) in an axial direction overlaps with the region covered by the annular groove (8) in an axial direction or is encompassed by it.

11. An electric motor according to any one of the preceding claims,
**characterised in that**
the projections contact the shaft (1, 31).

12. An electric motor according to any one of the preceding claims,
**characterised in that**
the projections are regularly and/or uniformly spaced apart from one another in a circumferential direction
and/or **in that** the gap regions (9) are formed in an identical manner to one another, in particular therefore each gap region merges in each case into one of the other gap regions (9) by a rotation in a circumferential direction by an angular amount.

13. An electric motor according to any one of the preceding claims,
**characterised in that**
the distributor ring (3, 33) is integrally connected to the active part (2), in particular to the first individual sheet of the bundle of laminations of the active part (2).

14. An electric motor according to any one of the preceding claims,
**characterised in that**
the radial width of the gap regions (9) is less than the radial extension of the annular groove (8).

15. An electric motor according to any one of the preceding claims,
**characterised in that**
the distributor ring (3, 33) has, in particular at its side remote from the active part (2), a radially inwards projecting projection (7) encircling in an uninterrupted manner in a circumferential direction, which projection rests against the shaft (1, 31) in a touching manner, in particular in a close manner,
in particular such that the gap (39) is bounded axially by the distributor ring (3, 33) itself and at the other side, therefore at its side facing the active part (2), by the active part (2).

## Revendications

1. Moteur électrique avec une partie active (2) emboîtée sur un arbre (1, 31), en particulier un arbre de rotor,
dans lequel une bague de distribution (3, 33) est emboîtée sur l'arbre (1, 31) et est en contact avec la partie active (2),
dans lequel la bague de distribution (3, 33) présente une rainure annulaire (8),
dans lequel la rainure annulaire (8) débouche radialement vers l'extérieur, en particulier dans l'environnement, par une ouverture de sortie (4) et débouche dans une fente (39), qui est disposée entre la bague de distribution (3, 33) et l'arbre (1, 31), par des ouvertures de sortie (5),
dans lequel la fente (39) est disposée radialement à l'intérieur de la rainure annulaire (8) et/ou la zone de distance radiale couverte par la rainure annulaire (8) est disposée radialement à l'extérieur de la zone de distance radiale couverte par la fente (39),
dans lequel des zones interstitielles (9) sont formées entre la partie active (2) et l'arbre (1, 31), lesquelles débouchent respectivement dans la fente (39),
dans lequel les zones interstitielles (9), au moins partiellement, et la rainure annulaire (8) ainsi que la fente (39) sont remplies de colle, de sorte que l'arbre (1, 31) est relié à la bague de distribution (3, 33) et à la partie active (2) par liaison de matière,
dans lequel les zones interstitielles (9) sont séparées les unes des autres au moyen de saillies dépassant radialement vers l'intérieur en direction de l'arbre (1, 31) sur la partie active (2), en particulier sur l'empilage de tôles de la partie active (2),
dans lequel un épaulement d'arbre est formé sur l'arbre (1, 31), sur lequel la bague de distribution (3, 33) est centrée et alignée, la bague de distribution (3, 33) étant emboîtée sur l'épaulement d'arbre (53) par un évidement en forme de pot.

2. Moteur électrique selon la revendication 1,
**caractérisé en ce que**
la partie active (2) présente un empilage de tôles dont les tôles individuelles sont empilées par estampage.

3. Moteur électrique selon l'une des revendications précédentes,
**caractérisé en ce que**
la bague de distribution présente un chanfrein d'introduction (50) pour l'enfilage de l'épaulement d'arbre (53) dans l'évidement en forme de pot.

4. Moteur électrique selon l'une des revendications précédentes,
**caractérisé en ce que**
un premier joint, en particulier un joint torique ou un joint injecté sur la bague de distribution (3, 33), est disposé entre la bague de distribution (3, 33) et l'épaulement d'arbre (53) de l'arbre (1, 31),
et/ou **en ce que**
un deuxième joint, en particulier un joint torique ou un joint injecté sur la bague de distribution (3, 33), est disposé entre la bague de distribution et la partie active (2).

5. Moteur électrique selon l'une des revendications précédentes,
**caractérisé en ce que**
la zone couverte par la bague de distribution (3, 33) dans la direction axiale est adjacente à la zone couverte par la partie active (2) dans la direction axiale.

6. Moteur électrique selon l'une des revendications précédentes,
**caractérisé en ce que**
la rainure annulaire (8) est délimitée par la partie active (2), en particulier par une première tôle individuelle de la partie active (2),
en particulier dans lequel la rainure annulaire (8) est délimitée par la partie active (2), en particulier par une première tôle individuelle de la partie active (2), conjointement avec la bague de distribution (3, 33).

7. Moteur électrique selon l'une des revendications précédentes,
**caractérisé en ce que**
la rainure annulaire (8) présente deux ouvertures de sortie (5) et s'étend en direction circonférentielle depuis la plage angulaire circonférentielle couverte par l'ouverture d'entrée (4) jusqu'aux plages angulaires circonférentielles respectives couvertes par les deux ouvertures de sortie (5).

8. Moteur électrique selon l'une des revendications précédentes,
**caractérisé en ce que**
la fente (39) s'étend de manière ininterrompue dans la direction circonférentielle,
et/ou **en ce que**
la rainure annulaire (8) est délimitée par la bague de distribution (3, 33) conjointement avec la partie active (2).

9. Moteur électrique selon l'une des revendications précédentes,
**caractérisé en ce que**
la bague de distribution (3, 33) présente une autre zone de rainure annulaire (6) qui est espacée de la rainure annulaire (8) dans la direction circonférentielle,
dans lequel la zone de distance radiale couverte par l'autre zone de rainure annulaire (6) est identique à la zone de distance radiale couverte par la rainure annulaire (8),
dans lequel la zone axiale couverte par l'autre zone de rainure annulaire (6) est identique à la zone axiale couverte par la rainure annulaire (8).

10. Moteur électrique selon l'une des revendications précédentes,
**caractérisé en ce que**
la zone couverte par la fente (39) dans la direction axiale chevauche la zone couverte par la rainure annulaire (8) dans la direction axiale ou est comprise par celle-ci.

11. Moteur électrique selon l'une des revendications précédentes,
**caractérisé en ce que**
les saillies sont en contact avec l'arbre (1, 31).

12. Moteur électrique selon l'une des revendications précédentes,
**caractérisé en ce que**
les saillies sont régulièrement et/ou uniformément espacées les unes des autres dans la direction circonférentielle
et/ou **en ce que** les zones interstitielles (9) sont formées de manière identique les unes aux autres, en particulier de sorte que chaque zone interstitielle se transforme respectivement en l'une des autres zones interstitielle (9) par une rotation dans la direction circonférentielle d'une certaine valeur angulaire.

13. Moteur électrique selon l'une des revendications précédentes,
**caractérisé en ce que**
la bague de distribution (3, 33) est reliée à la partie active (2), en particulier à la première tôle individuelle de l'empilage de tôles de la partie active (2), par liaison de matière.

14. Moteur électrique selon l'une des revendications précédentes,
**caractérisé en ce que**
la largeur radiale des zones interstitielles (9) est inférieure à l'extension radiale de la rainure annulaire (8).

15. Moteur électrique selon l'une des revendications précédentes,
**caractérisé en ce que**
la bague de distribution (3, 33) présente, en particulier sur son côté opposé à la partie active (2), une saillie (7) dépassant radialement vers l'intérieur et s'étendant de manière ininterrompue dans la direction circonférentielle, laquelle est en contact, en particulier étanche, avec l'arbre (1, 31),
en particulier de sorte que la fente (39) est délimitée axialement par la bague de distribution (3, 33) elle-même et d'autre part, donc sur son côté tourné vers la partie active (2), par la partie active (2).
